# FASCICULE DE BREVET EUROPEEN

(11) **EP 4 408 009 B1**
(45) Date de publication et mention de la délivrance du brevet: **07.10.2026**
(21) Numéro de dépôt: 24152464.4
(22) Date de dépôt: 17.01.2024
(51) Int. Cl.: H04N 23/71, H04N 23/95

(54) **SYSTÈME DE SURVEILLANCE DE MOUVEMENTS D'UN OBJET EN LIMITANT L'UTILISATION DE RESSOURCES**
SYSTEM ZUR ÜBERWACHUNG DER BEWEGUNG EINES OBJEKTS DURCH BEGRENZUNG DER RESSOURCENNUTZUNG
SYSTEM FOR MONITORING OBJECT MOVEMENTS BY LIMITING RESOURCE USAGE

(30) Priorité: 24.01.2023 FR 2300645
(43) Date de publication de la demande: 31.07.2024
(73) Titulaire: Airbus Operations SAS, 31060 Toulouse (FR)
(72) Inventeur: LEFEBVRE-ALBARET, François, 31060 TOULOUSE (FR); HABBEDDINE, Yacine, 31060 TOULOUSE (FR)
(74) Mandataire: Gevers & Orès

(56) Documents cités:
- US-A1- 2017 137 772

## Description

### Domaine technique

La présente invention concerne un système de surveillance de mouvements d'un objet susceptible de bouger.

### État de la technique

Le coup de bélier (« water hammer » en anglais) est un phénomène de surpression qui peut apparaître lors d'une variation brusque de la vitesse d'un liquide dans une canalisation, par suite d'une fermeture ou d'une ouverture rapide d'une vanne, d'un robinet, ou du démarrage ou de l'arrêt d'une pompe. Ce phénomène peut se rencontrer à bord d'un aéronef. Généralement, le coup de bélier peut entraîner l'endommagement des attaches qui maintiennent les canalisations à bord de l'aéronef. Il peut donc être intéressant de surveiller les canalisations sujettes aux coups de bélier afin de connaître tout le déroulé de l'apparition du phénomène de coups de bélier. La surveillance peut être réalisée à l'aide de caméras. Toutefois, l'utilisation de caméras usuelles peut se révéler consommatrice de mémoire de stockage d'images et d'énergie. Le document US 2017/137772 A1 permet de détecter la présence ou l'absence de de particules biologiques dans un milieu. Toutefois, il ne permet pas de surveiller des phénomènes rapides et/ou brusques tels que des coups de bélier.

Un objectif de la présente invention est de proposer une solution permettant l'utilisation de caméras pour surveiller des phénomènes de variations rapides et/ou brusques, tel que les coups de bélier, en limitant la consommation de ressources telles que des ressources en mémoire et des ressources en énergie. La solution proposée peut être utilisée dans la surveillance de différents types de phénomène entraînant des mouvements brusques et/ou rapides d'un objet.

### Exposé de l'invention

La présente invention concerne un système de surveillance de mouvements d'un objet susceptible de se déplacer.

Selon l'invention, le système comporte :
- un miroir plan semi-réfléchissant,
- une première source lumineuse configurée pour émettre un premier éclairage continu,
- une caméra d'événement présentant un capteur destiné à capter des variations de luminosité d'une scène dans laquelle l'objet est susceptible de se déplacer, le capteur étant susceptible de générer au moins un événement quand le capteur capte au moins une variation de luminosité causée par au moins un mouvement de l'objet ;
le miroir plan semi-réfléchissant étant disposé de façon que le miroir plan semi-réfléchissant réfléchisse au moins en partie le premier éclairage en un premier éclairage réfléchi vers le capteur de la caméra d'événement.

Ainsi, l'utilisation d'une caméra d'événement qui enregistre les événements seulement quand un événement se produit permet de limiter les ressources en mémoire et en énergie. Par ailleurs, l'éclairage de ladite caméra par le premier éclairage permet de limiter le nombre d'événements pouvant être générés dans les zones de faible luminosité.

De façon avantageuse, le système comprend en outre une deuxième source lumineuse configurée pour émettre un deuxième éclairage, la deuxième source lumineuse étant placée à une image du foyer de la caméra d'événement symétriquement par rapport au miroir plan semi-réfléchissant ;
le miroir semi-réfléchissant étant en outre disposé de façon que le miroir semi-réfléchissant réfléchisse au moins en partie le deuxième éclairage vers la scène dans laquelle l'objet est susceptible de se déplacer.

Selon une première variante, la première source lumineuse est configurée pour éclairer de façon homogène le capteur de la caméra d'événement.

Selon une deuxième variante, la première source lumineuse est configurée pour éclairer de façon non homogène le capteur de la caméra d'événement, la première source lumineuse étant configurée pour émettre un premier éclairage et un premier éclairage réfléchi présentant un motif lumineux ayant une luminosité constante sauf dans des régions d'intérêt dans lesquelles la luminosité est plus faible que ladite luminosité constante.

En outre, le système comprend au moins une cible destinée à être fixée sur l'objet susceptible de se déplacer, la ou les cibles présentant un motif spécifique qui présente un contraste de luminance non nul entre au moins deux zones du motif spécifique.

Selon un deuxième exemple, la ou les cibles comprennent des zones rétro-réfléchissantes.

Par ailleurs, le système comprend un dispositif de stockage configuré pour stocker les événements générés par le capteur de la caméra d'événement.

En outre, le système comprend un dispositif de détection configuré pour détecter au moins un mouvement dans la scène, le dispositif de détection étant apte à transmettre à une unité de pilotage de la caméra d'événement un signal de réveil susceptible de mettre en marche ladite caméra d'événement quand le dispositif de détection détecte au moins un mouvement dans la scène.

Selon un premier mode de réalisation, le deuxième éclairage émis par la deuxième source lumineuse correspond à un éclairage continu.

Selon un deuxième mode de réalisation, le deuxième éclairage émis par la deuxième source lumineuse correspond à un éclairage présentant une intensité qui varie sinusoïdalement en fonction du temps.

Selon un troisième mode de réalisation, le deuxième éclairage émis par la deuxième source lumineuse correspond à un éclairage présentant une intensité qui varie de façon intermittente en fonction du temps.

Par ailleurs, le système comprend un dispositif de traitement configuré pour déterminer en fonction du temps la position de l'objet et/ou de la vitesse de mouvement de l'objet à partir des événements générés par le capteur de la caméra d'événement.

De plus, le dispositif de traitement est configuré pour déterminer une ou des fréquences de vibration de mouvement à partir des positions de l'objet.

### Brève description des figures

Les figures annexées feront bien comprendre comment l'invention peut être réalisée. Sur ces figures, des références identiques désignent des éléments semblables.
La figure 1 est une représentation schématique du système de surveillance.
La figure 2 représente un premier exemple (a) de cible et un deuxième exemple (b) de cible.
La figure 3 représente une courbe d'évolution de la position verticale de l'objet en fonction du temps.
La figure 4 représente une courbe correspondant à une décomposition fréquentielle par transformée de Fourier rapide d'une courbe similaire à celle de la figure 3.
La figure 5 représente un exemple d'image de cible fixée sur l'objet captée par la caméra d'événement lorsqu'elle n'est pas éblouie par le premier rayonnement lumineux réfléchi.
La figure 6 représente un exemple d'image de cible fixée sur l'objet captée par la caméra d'événement lorsqu'elle est éblouie par le premier éclairage réfléchi.

### Description détaillée

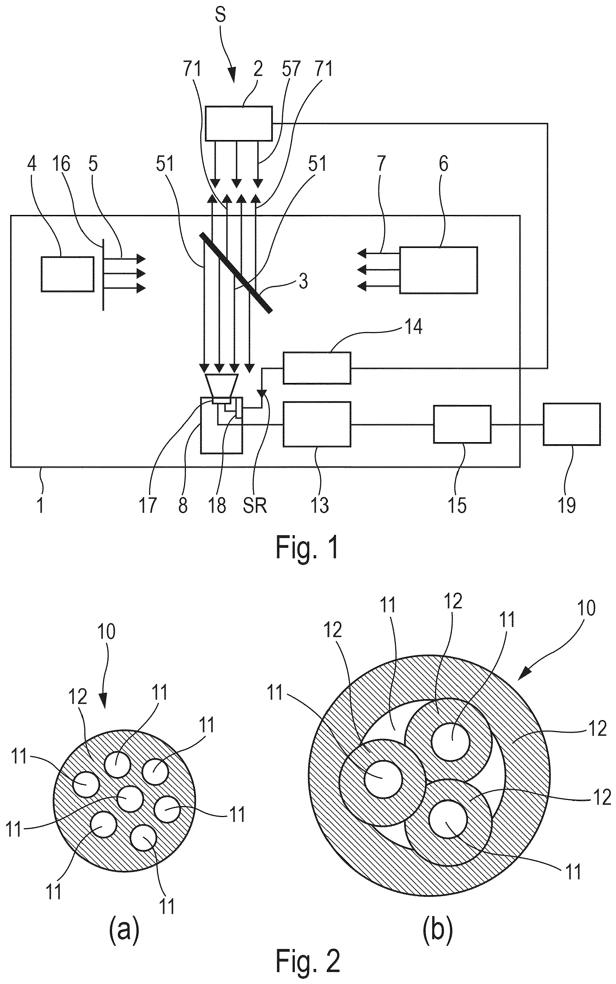

Le système (ci-après système 1) de surveillance de mouvements d'un objet 2 est représenté schématiquement sur la figure 1.

Dans le cas du phénomène de coup de bélier, l'objet 2 peut correspondre à une canalisation.

Le système 1 comporte au moins un miroir plan semi-réfléchissant 3, une première source lumineuse 4 et une caméra basée sur l'enregistrement d'événements que nous appellerons caméra d'événement 8.

La première source lumineuse 4 est configurée pour émettre un premier éclairage 5 continu. Le miroir plan semi-réfléchissant 3 réfléchit au moins en partie le premier éclairage 5 en un premier éclairage réfléchi 51 vers la caméra d'événement 8.

La caméra d'événement 8 présente un capteur 17 destiné à capter au moins une variation de luminosité d'une scène S dans laquelle l'objet 2 est susceptible de se déplacer. Le capteur 17 peut correspondre à une matrice de pixels.

Le miroir plan semi-réfléchissant 3 réfléchit au moins en partie le premier éclairage 5 en un premier éclairage réfléchi 51 vers le capteur 17 de la caméra d'événement 8. Le capteur 17 de la caméra d'événement 8 est susceptible de générer au moins un événement quand le capteur 17 capte au moins une variation de luminosité causée par au moins un mouvement de l'objet. Le capteur 17 peut ainsi générer au moins un événement quand un pixel dudit capteur 17 capte une variation de luminosité dans la scène S.

Une caméra d'événement (« event-based camera » ou « event camera » en anglais) comprend un capteur 17 présentant une matrice de pixels qui réagissent indépendamment aux variations de luminosité lorsqu'ils se produisent. Chaque pixel du capteur 17 stocke un niveau de luminosité de référence et le compare en permanence au niveau de luminosité actuel capté. Si la différence de luminosité dépasse un seuil ou si le rapport entre le niveau de luminosité actuelle et le niveau de luminosité de référence dépasse un seuil, ce pixel réinitialise son niveau de référence au niveau de luminosité actuelle (cela permet au capteur 17 de s'adapter à la luminosité ambiante) et génère alors un événement : un paquet discret contenant l'adresse et l'horodatage du pixel. L'événement généré par le capteur correspond donc à un signal représentatif d'un paquet discret contenant l'adresse et l'horodatage du pixel. Chacun des événements peut également contenir la polarité (augmentation ou diminution) d'une variation de luminosité ou une mesure instantanée du niveau d'éclairage. Ainsi, le capteur 17 de la caméra d'événement 8 génère un événement. Ici, un événement peut être causé par un mouvement de l'objet 2.

Une caméra d'événement 8 a pour avantage de consommer très peu d'énergie et très peu de mémoire pour stocker des images (par rapport à une caméra usuelle qui capte des images en continu). Par ailleurs, une caméra d'événement 8 est peu onéreuse. Elle génère un flux de données limitée (par exemple 50 Mo/s) et peut théoriquement générer des événements avec une résolution temporelle d'environ 1 ms. Elle peut être alimentée par une puissance de 10 mW. Elle peut donc être utilisée pour des essais en vol pour lesquels de petits mouvements et des vibrations peuvent être captés pendant de longs essais en vol pouvant durer plus de trois heures.

Selon une première variante de réalisation, la première source lumineuse 4 est configurée pour éclairer de façon homogène le capteur 17 de la caméra d'événement 8. Le premier éclairage 5 émis par la première source lumineuse 4 est donc homogène. Le premier éclairage réfléchi 51 par le miroir plan semi-réfléchissant 3 est également homogène. Une source lumineuse éclaire de façon homogène si elle éclaire de façon uniforme (c'est-à-dire d'une même luminosité) au moins l'ensemble de la scène S dont les variations de luminosité sont captées par le capteur 17 de la caméra d'événement 8. Afin d'obtenir l'homogénéité du premier rayonnement lumineux 5, le système 1 peut comprendre un écran 16 muni d'un diffuseur qui diffuse de façon homogène l'éclairage issu de la première source lumineuse 4.

Selon une deuxième variante de réalisation, au moins la première source lumineuse 4 est configurée pour éclairer de façon non-homogène le capteur 17 de la caméra d'événement 8. Une source lumineuse éclaire de façon non-homogène si elle éclaire de façon non-uniforme au moins l'ensemble de la scène S dont les variations de luminosité sont captées par le capteur 17 de la caméra d'événement 8. Dans cette deuxième variante de réalisation, la première source lumineuse 4 est configurée pour émettre un premier éclairage 5 et un premier éclairage réfléchi 51 présentant un motif lumineux. Par exemple, le motif lumineux peut présenter une luminosité constante sauf dans certaines régions d'intérêt dans lesquelles la luminosité est plus faible que ladite luminosité constante. Ainsi, seuls les événements dans les régions d'intérêt seront captés par le capteur 17 de la caméra d'événement 8. La non-homogénéité du premier éclairage réfléchi 51 peut être obtenue grâce à une première source lumineuse 4 non homogène. Elle peut aussi être obtenue à l'aide d'un miroir plan semi-réfléchissant 3 dont la surface a été configurée pour obtenir, à partir d'un premier éclairage 5, un premier éclairage réfléchi 51 présentant le motif lumineux souhaité.

Le miroir plan semi-réfléchissant 3 est disposé de façon qu'il réfléchisse au moins en partie le premier éclairage 5 vers le capteur 17 de la caméra d'événement 8. Le capteur 17 de la caméra d'événement 8 est donc « ébloui » par le premier éclairage réfléchi 51, c'est-à-dire, le premier éclairage réfléchi 51 est dirigé vers le capteur 17 de la caméra d'événement 8.

La luminance du rayonnement lumineux reçue par un pixel de coordonnées (x, y) du capteur 17 de la caméra d'événement 8 à un instant t est déterminée par la relation suivante : $P \left(x, y, t\right) = S \left(x, y, t\right) \times L \left(t\right) + K ,$ dans laquelle :
*P*(*x,y,t*) correspond à ladite luminance reçue par un pixel de coordonnées (x, y) du capteur 17 de la caméra d'événement 8 à un instant t,
*S*(*x,y,t*) correspond à la clarté (« brightness » en anglais) d'un point de la scène S reçu par un pixel de coordonnée (x,y) du capteur 17 de la caméra d'événement 8 à un instant t,
*L*(*t*) correspond à l'intensité lumineuse éclairant la scène S (par exemple, l'intensité lumineuse de la lumière ambiante), et
*K* correspond à la luminance du premier éclairage réfléchi 51 par le miroir plan semi-réfléchissant 3.

Si *K* = 0 (autrement dit : si le capteur 17 de la caméra d'événement 8 n'est pas « ébloui » par le premier éclairage réfléchi 51), la variation de l'intensité lumineuse (ou de luminosité) *L*(*t*) entraîne l'apparition d'événements à plusieurs endroits qui correspondent à toutes les limites entre deux couleurs contrastées ou à des parties texturées de la scène S. Cela entraîne un nombre important d'événements.

Mais, si le capteur 17 de la caméra d'événement 8 est « ébloui » par le premier éclairage 5 émise par la première source lumineuse 4 (en particulier si *K* et max(*S*(*x*,*y,t*) × *L*(*t*)) sont du même ordre de grandeur), seules les parties les plus brillantes de la scène S entraîne des événements.

Selon un mode de réalisation préféré, le système 1 comprend une deuxième source lumineuse 6 configurée pour émettre un deuxième éclairage 7. Le miroir plan semi-réfléchissant 3 est disposé en outre de façon qu'il réfléchisse au moins en partie le deuxième éclairage 7 vers la scène S dans laquelle l'objet 2 est susceptible de se déplacer. Par ailleurs, la deuxième source lumineuse 6 est disposée dans l'image du foyer de la caméra d'événement 8. *L*(*t*) correspond alors à l'intensité lumineuse du deuxième éclairage réfléchi 71 par le miroir plan semi-réfléchissant 3 éclairant la scène S.

Selon une première variante de ce mode de réalisation préféré, le deuxième éclairage 7 émis par la deuxième source lumineuse 6 correspond à un éclairage continu dans le temps. Cela signifie que l'intensité lumineuse du deuxième éclairage 7 reste constante dans le temps.

Selon une deuxième variante, le deuxième éclairage 7 émis par la deuxième source lumineuse 6 correspond à un rayonnement lumineux sinusoïdal. Cela signifie que l'intensité lumineuse du deuxième éclairage 7 varie sinusoïdalement ou en triangle en fonction du temps.

Selon une troisième variante, le deuxième éclairage 7 émis par la deuxième source lumineuse 6 correspond à un rayonnement lumineux intermittent, tel qu'un rayonnement lumineux stroboscopique. Cela signifie que l'intensité lumineuse du deuxième éclairage 7 varie de façon intermittente en fonction du temps.

Quand le deuxième rayonnement lumineux 7 varie de façon sinusoïdale ou de façon intermittente, les événements sont générés par bloc de temps (« time frame » en anglais) régulier afin d'estimer les positions de cibles 10 à fréquence d'images (« frame rate » en anglais) constante.

Toutefois, un éclairage continu permet d'éviter que les événements soient générés tous en même temps, ce qui permet d'obtenir une meilleure précision temporelle.

À titre d'exemple représenté sur la figure 1, le capteur 17 de la caméra d'événement 8 fait face à la scène S dans laquelle l'objet 2 est susceptible de se déplacer. La première source lumineuse 4 est disposée pour que le premier éclairage 5 soit orienté vers la deuxième source lumineuse 6 et la deuxième source lumineuse 6 est disposée pour que le deuxième éclairage 7 soit orienté vers la première source lumineuse 4. Le premier éclairage 5 et le deuxième éclairage 7 se propagent dans une même direction avant d'être réfléchis chacun par le miroir plan semi-réfléchissant 3. Le miroir plan semi-réfléchissant 3 est disposé afin qu'il soit compris dans un plan faisant 45° avec la direction de propagation du premier éclairage 6 et du deuxième éclairage 7, de façon qu'une première face du miroir plan semi-réfléchissant 3 réfléchisse à 90°, au moins en partie, le premier éclairage 5 vers le capteur 17 de la caméra d'événement 8 (premier éclairage réfléchi 51) et qu'une deuxième face du miroir plan semi-réfléchissant 3 réfléchisse à 90°, au moins en partie, le deuxième éclairage 7 vers la scène S dans laquelle l'objet 2 est susceptible de se déplacer (deuxième éclairage réfléchi 71). Dans cet exemple, le système 1 comprend également un écran 16 permettant de diffuser de façon homogène le premier éclairage 5 émis par la première source lumineuse 4.

Les variations de luminosité de la scène S sont captées par le capteur 17 de la caméra d'événement 8 à travers le miroir plan semi-réfléchissant 3.

Le système 1 peut aussi comprendre un dispositif de stockage 13 configuré pour stocker les événements générés par le capteur 17 de la caméra d'événement 8. Avantageusement, le système 1 comprend en outre au moins une cible 10 destinée à être fixée sur l'objet 2 susceptible de se déplacer.

Selon une première variante, la ou les cibles 10 comportent un motif spécifique qui présente un contraste de luminance non nul entre au moins deux zones du motif spécifique. En effet, pour une caméra d'événement 8, ce sont les pixels du capteur 17 captant la ou les limites entre deux zones contrastées qui apportent une information sur le mouvement. Cela permet d'améliorer les informations obtenues et de limiter le nombre d'événements générés par le capteur 17 de la caméra d'événement 8. Plus le contraste de luminance entre deux zones est important, meilleure est la capacité du capteur 17 à capter les variations de luminosité.

Par exemple, le motif spécifique comprend une pluralité de points blancs 11 juxtaposés sur un fond noir 12. La figure 2 représente deux exemples (a) et (b) de motifs spécifiques. Le motif spécifique de l'exemple (a) comprend une pluralité de points blancs 11 sur un fond noir 12. Le motif spécifique de l'exemple (b) comprend un point blanc 11 entouré d'un fond noir 12 sur lequel sont disposés trois points blancs 11 entourés d'un fond noir 12. Sur la figure 2, les zones hachurées correspondent à des zones noires.

Selon une deuxième variante, la ou les cibles 10 comprennent des zones rétro-réfléchissantes. Dans cette variante, il peut être important de faire en sorte que la réflexion de la ou des cibles 10 soit confocale avec le capteur 17 de la caméra d'événement 8. L'utilisation de cibles rétro-réfléchissantes entraîne un fort contraste et donc un horodatage des événements précis quand l'objet 2 se déplace dans la scène S.

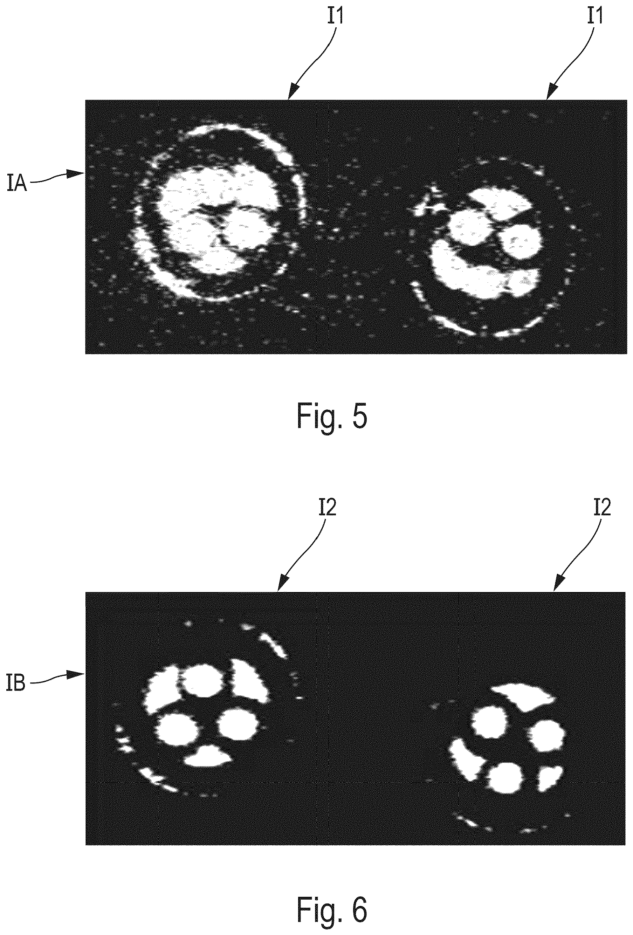

La figure 5 et la figure 6 représentent chacune une image IA et IB respectivement, captée par le capteur 17 de la caméra d'événement 8. L'image IA de la figure 5 correspond à une image captée lorsque le capteur 17 de la caméra d'événement 8 n'est pas « ébloui » par le premier éclairage réfléchi 51. Les zones I1 correspondent à des images de cibles 10 (identiques à celle de la figure 2(b)) fixées sur l'objet 2. L'image IB de la figure 6 correspond à une image captée lorsque le capteur 17 de la caméra d'événement 8 est « ébloui » par le premier éclairage réfléchi 51. Les zones I2 correspondent à des images de cibles 10 (identiques à celle de la figure 2(b)) fixées sur l'objet 2. L'avantage d'éblouir le capteur 17 de la caméra d'événement 8 avec le premier éclairage réfléchi 51 apparaît clairement. Les images IB présentent moins de bruit que les images IA, ce qui permet d'obtenir un nombre d'événements moindre. En effet, le capteur 17 de la caméra d'événement 8 sera moins exposée aux variations de luminosité dues au bruit.

Par ailleurs, le système 1 peut comprendre un dispositif de détection 14 configuré pour détecter au moins un mouvement dans la scène S. Le dispositif de détection 14 est apte à transmettre à une unité de pilotage 18 de la caméra d'événement 8 un signal de réveil SR susceptible de mettre en marche ladite caméra d'événement 8 quand le dispositif de détection 14 détecte au moins un mouvement de l'objet 2, afin que le capteur 17 de la caméra d'événement 8 capte les variations de luminosité. L'unité de pilotage 18 est comprise par la caméra d'événement 8.

À titre d'exemple, le dispositif de détection 14 correspond à un accéléromètre. Sur la figure 1, le dispositif de détection 14 est séparé de l'objet 2, par exemple pour détecter une mise en mouvement d'un aéronef, toutefois il peut être fixé sur l'objet 2 afin de détecter au moins un mouvement de l'objet 2.

Le système 1 peut aussi comprendre un dispositif de traitement 15 configuré pour déterminer, en fonction du temps, la position de l'objet 2 et/ou de la vitesse de mouvement de l'objet 2 en deux dimensions à partir des événements générés par la caméra d'événement 8. Dans le cas où l'objet 2 est non-déformable, un seul système 1 peut être suffisant pour déterminer la position et/ou la vitesse de mouvement de l'objet 2. Dans le cas où l'objet 2 est déformable, deux systèmes 1 peuvent être nécessaires pour déterminer la position et/ou la vitesse de mouvement de l'objet 2. La position de l'objet 2 et/ou de la vitesse de mouvement de l'objet 2 déterminées peuvent être transmises à un dispositif utilisateur 19.

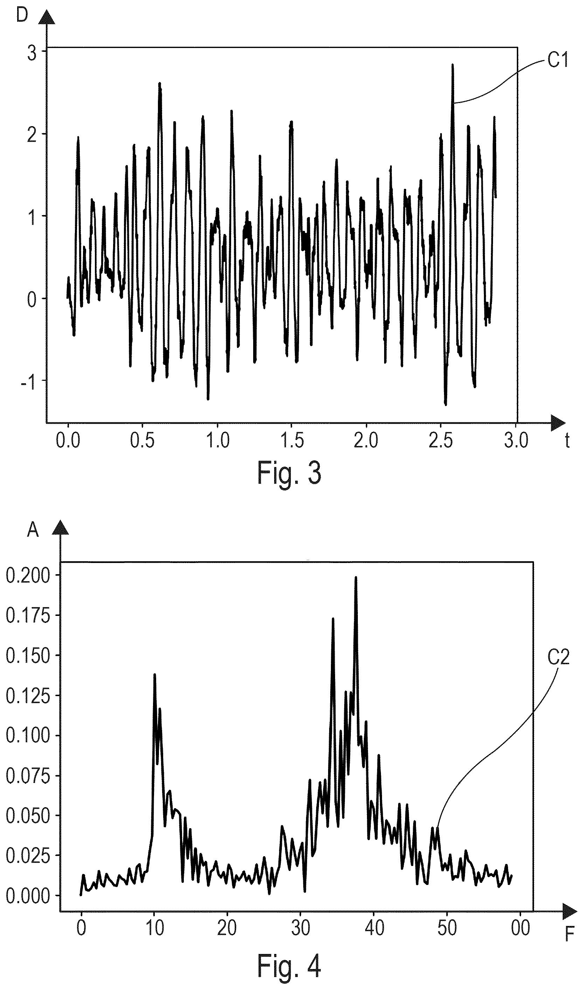

Une position de l'objet 2 (par rapport à une référence correspondant à l'endroit où l'objet 2 est immobile) et/ou une vitesse de mouvement peuvent être déterminées à partir d'au moins deux événements générés par le capteur 17 de la caméra d'événement 8 en fonction du temps. Un traitement de ces événements permet d'obtenir ces positions et ces vitesses de mouvement de l'objet 2. La figure 3 représente un exemple de courbe C1 déterminée par le dispositif de traitement 15. La courbe C1 correspond à une évolution de la position verticale D de l'objet 2 en fonction du temps t.

Le dispositif de traitement 15 peut être également configuré pour déterminer une ou des fréquences de vibration de mouvement à partir des positions de l'objet 2. La figure 4 représente un exemple de courbe C2 déterminée par le dispositif de traitement 15. La courbe C2 correspond à une évolution d'amplitudes de mouvement A en fonction de la fréquence de vibrations F de mouvement de l'objet 2. Cette courbe C2 peut être obtenue par une transformée de Fourier de la position de l'objet 2 et/ou de la vitesse de mouvement de l'objet 2 en fonction du temps (courbe C1)..

## Revendications

1. Système de surveillance de mouvements d'un objet (2),
**caractérisé en ce qu'**il comporte :
- un miroir plan semi-réfléchissant (3),
- une première source lumineuse (4) configurée pour émettre un premier éclairage (5) continu,
- une caméra d'événement (8) présentant un capteur (17) destiné à capter des variations de luminosité d'une scène (S) dans laquelle l'objet (2) est susceptible de se déplacer, le capteur (17) étant susceptible de générer au moins un événement quand le capteur (17) capte au moins une variation de luminosité causée par au moins un mouvement de l'objet (2) ;
le miroir plan semi-réfléchissant (3) étant disposé de façon que le miroir plan semi-réfléchissant (3) réfléchisse au moins en partie le premier éclairage (5) en un premier éclairage réfléchi (51) vers le capteur (17) de la caméra d'événement (8).

2. Système selon la revendication 1,
**caractérisé en ce qu'**il comprend en outre une deuxième source lumineuse (6) configurée pour émettre un deuxième éclairage (7), la deuxième source lumineuse (6) étant placée à une image du foyer de la caméra d'événement (8) symétriquement par rapport au miroir plan semi-réfléchissant (3) ;
le miroir semi-réfléchissant (3) étant en outre disposé de façon que le miroir semi-réfléchissant (3) réfléchisse au moins en partie le deuxième éclairage (7) vers la scène (S) dans laquelle l'objet (2) est susceptible de se déplacer.

3. Système selon l'une des revendications 1 et 2,
**caractérisé en ce que** la première source lumineuse (4) est configurée pour éclairer de façon homogène le capteur (17) de la caméra d'événement (8).

4. Système selon l'une des revendications 1 et 2,
**caractérisé en ce que** la première source lumineuse (4) est configurée pour éclairer de façon non homogène le capteur (17) de la caméra d'événement (8), la première source lumineuse (4) étant configurée pour émettre un premier éclairage (5) et un premier éclairage réfléchi (51)présentant un motif lumineux ayant une luminosité constante sauf dans des régions d'intérêt dans lesquelles la luminosité est plus faible que ladite luminosité constante.

5. Système selon l'une des revendications 1 à 4,
**caractérisé en ce qu'**il comprend en outre au moins une cible (10) destinée à être fixée sur l'objet (2) susceptible de se déplacer, la ou les cibles (10) présentant un motif spécifique qui présente un contraste de luminance non nul entre au moins deux zones du motif spécifique.

6. Système selon la revendication 5,
**caractérisé en ce que** la ou les cibles (10) comprennent des zones rétro-réfléchissantes.

7. Système selon l'une des revendications 1 à 6,
**caractérisé en ce qu'**il comprend un dispositif de stockage (13) configuré pour stocker les événements générés par le capteur (17) de la caméra d'événement (8).

8. Système selon l'une des revendications 1 à 7,
**caractérisé en ce qu'**il comprend un dispositif de détection (14) configuré pour détecter au moins un mouvement dans la scène (S), le dispositif de détection (14) étant apte à transmettre à une unité de pilotage (18) de la caméra d'événement (8) un signal de réveil (SR) susceptible de mettre en marche ladite caméra d'événement (8) quand le dispositif de détection (14) détecte au moins un mouvement dans la scène (S).

9. Système selon l'une des revendications 2 à 8,
**caractérisé en ce que** le deuxième éclairage (7) émis par la deuxième source lumineuse (6) correspond à un éclairage continu.

10. Système selon l'une des revendications 2 à 8,
**caractérisé en ce que** le deuxième éclairage (7) émis par la deuxième source lumineuse (6) correspond à un éclairage présentant une intensité qui varie sinusoïdalement en fonction du temps.

11. Système selon l'une des revendications 2 à 8,
**caractérisé en ce que** le deuxième éclairage (7) émis par la deuxième source lumineuse (6) correspond à un éclairage présentant une intensité qui varie de façon intermittente en fonction du temps.

12. Système selon l'une des revendications 1 à 11,
**caractérisé en ce qu'**il comprend un dispositif de traitement (15) configuré pour déterminer en fonction du temps la position de l'objet (2) et/ou de la vitesse de mouvement de l'objet (2) à partir des événements générés par le capteur (17) de la caméra d'événement (8).

13. Système selon la revendication 12,
**caractérisé en ce que** le dispositif de traitement (15) est configuré pour déterminer une ou des fréquences de vibration de mouvement à partir des positions de l'objet (2).

## Patentansprüche

1. System zur Überwachung von Bewegungen eines Objekts (2),
**dadurch gekennzeichnet, dass** es umfasst:
- einen halbreflektierenden Planspiegel (3),
- eine erste Lichtquelle (4), die so ausgelegt ist, dass sie eine erste Dauerbeleuchtung (5) emittiert,
- eine Ereigniskamera (8), die einen Sensor (17) aufweist, der dazu bestimmt ist, Helligkeitsänderungen einer Szene (S), in der sich das Objekt (2) bewegen kann, zu erfassen, wobei der Sensor (17) mindestens ein Ereignis erzeugen kann, wenn der Sensor (17) mindestens eine Helligkeitsänderung erfasst, die durch mindestens eine Bewegung des Objekts (2) verursacht wird;
wobei der halbreflektierende Planspiegel (3) so angeordnet ist, dass der halbreflektierende Planspiegel (3) die erste Beleuchtung (5) mindestens zum Teil in einer ersten reflektierten Beleuchtung (51) in Richtung des Sensors (17) der Ereigniskamera (8) reflektiert.

2. System nach Anspruch 1,
**dadurch gekennzeichnet, dass** es weiter eine zweite Lichtquelle (6) umfasst, die so ausgelegt ist, dass sie eine zweite Beleuchtung (7) emittiert, wobei die zweite Lichtquelle (6) symmetrisch in Bezug auf den halbreflektierenden Planspiegel (3) auf einer Abbildung des Brennpunkts der Ereigniskamera (8) platziert ist;
wobei der halbreflektierende Spiegel (3) weiter so angeordnet ist, dass der halbreflektierende Spiegel (3) die zweite Beleuchtung (7) mindestens zum Teil in Richtung der Szene (S), in der sich das Objekt (2) bewegen kann, reflektiert.

3. System nach einem der Ansprüche 1 und 2,
**dadurch gekennzeichnet, dass** die erste Lichtquelle (4) so ausgelegt ist, dass sie den Sensor (17) der Ereigniskamera (8) homogen beleuchtet.

4. System nach einem der Ansprüche 1 und 2,
**dadurch gekennzeichnet, dass** die erste Lichtquelle (4) so ausgelegt ist, dass sie den Sensor (17) der Ereigniskamera (8) inhomogen beleuchtet, wobei die erste Lichtquelle (4) so ausgelegt ist, dass sie eine erste Beleuchtung (5) und eine erste reflektierte Beleuchtung (51) emittiert, die ein Lichtmuster aufweist, das mit Ausnahme von Bereichen von Interesse, in denen die Helligkeit geringer ist als die konstante Helligkeit, eine konstante Helligkeit aufweist.

5. System nach einem der Ansprüche 1 bis 4,
**dadurch gekennzeichnet, dass** es weiter mindestens ein Ziel (10) umfasst, das dazu bestimmt ist, an dem Objekt (2), das sich bewegen kann, befestigt zu werden, wobei das oder die Ziele (10) ein spezifisches Muster aufweisen, das einen Luminanzkontrast von ungleich null zwischen mindestens zwei Bereichen des spezifischen Musters aufweist.

6. System nach Anspruch 5,
**dadurch gekennzeichnet, dass** das oder die Ziele (10) retroreflektierende Bereiche umfassen.

7. System nach einem der Ansprüche 1 bis 6,
**dadurch gekennzeichnet, dass** es eine Speichervorrichtung (13) umfasst, die so ausgelegt ist, dass sie die von dem Sensor (17) der Ereigniskamera (8) erzeugten Ereignisse speichert.

8. System nach einem der Ansprüche 1 bis 7,
**dadurch gekennzeichnet, dass** es eine Detektionsvorrichtung (14) umfasst, die so ausgelegt ist, dass sie mindestens eine Bewegung in der Szene (S) erkennt, wobei die Detektionsvorrichtung (14) in der Lage ist, an eine Steuereinheit (18) der Ereigniskamera (8) ein Wecksignal (SR) zu übertragen, das die Ereigniskamera (8) einschalten kann, wenn die Detektionsvorrichtung (14) mindestens eine Bewegung in der Szene (S) erkennt.

9. System nach einem der Ansprüche 2 bis 8,
**dadurch gekennzeichnet, dass** die von der zweiten Lichtquelle (6) emittierte zweite Beleuchtung (7) einer Dauerbeleuchtung entspricht.

10. System nach einem der Ansprüche 2 bis 8,
**dadurch gekennzeichnet, dass** die von der zweiten Lichtquelle (6) emittierte zweite Beleuchtung (7) einer Beleuchtung entspricht, die eine sich zeitabhängig sinusförmig verändernde Intensität aufweist.

11. System nach einem der Ansprüche 2 bis 8,
**dadurch gekennzeichnet, dass** die von der zweiten Lichtquelle (6) emittierte zweite Beleuchtung (7) einer Beleuchtung entspricht, die eine sich zeitabhängig intermittierend verändernde Intensität aufweist.

12. System nach einem der Ansprüche 1 bis 11,
**dadurch gekennzeichnet, dass** es eine Verarbeitungsvorrichtung (15) umfasst, die so ausgelegt ist, dass sie auf Grundlage der von dem Sensor (17) der Ereigniskamera (8) erzeugten Ereignisse die Position des Objekts (2) und/oder die Bewegungsgeschwindigkeit des Objekts (2) zeitabhängig bestimmt.

13. System nach Anspruch 12,
**dadurch gekennzeichnet, dass** die Verarbeitungsvorrichtung (15) so ausgelegt ist, dass sie auf Grundlage der Positionen des Objekts (2) eine oder mehrere Bewegungsschwingungsfrequenzen bestimmt.

## Claims

1. A system for monitoring movements of an object,
wherein it comprises:
- a plane semi-reflecting mirror,
- a first light source configured to emit a continuous first illumination,
- an event camera exhibiting a sensor intended to capture variations in luminosity in a scene in which the object is liable to move, the sensor being liable to generate at least one event when the sensor captures at least one variation in luminosity caused by at least one movement of the object;
the plane semi-reflecting mirror being arranged so that the plane semi-reflecting mirror reflects, at least in part, the first illumination as a first illumination reflected toward the sensor of the event camera.

2. The system as claimed in claim 1,
wherein it further comprises a second light source configured to emit a second illumination, the second light source being placed in an image of the focus of the event camera symmetrically with respect to the plane semi-reflecting mirror;
the semi-reflecting mirror being, furthermore, arranged so that the semi-reflecting mirror reflects, at least in part, the second illumination toward the scene in which the object is liable to move.

3. The system as claimed in one of claims 1 and 2,
wherein the first light source is configured to illuminate the sensor of the event camera uniformly.

4. The system as claimed in one of claims 1 and 2,
wherein the first light source is configured to illuminate the sensor of the event camera non-uniformly, the first light source being configured to emit a first illumination and a reflected first illumination exhibiting a light pattern having a constant luminosity except in regions of interest in which the luminosity is lower than said constant luminosity.

5. The system as claimed in one of claims 1 to 4,
wherein it further comprises at least one target intended to be fastened to the object which is liable to move, the one or more targets exhibiting a specific pattern which exhibits a non-zero luminance contrast between at least two areas of the specific pattern.

6. The system as claimed in claim 5,
wherein the one or more targets comprise retro-reflecting areas.

7. The system as claimed in one of claims 1 to 6,
wherein it comprises a storage device configured to store the events which are generated by the sensor of the event camera.

8. The system as claimed in one of claims 1 to 7,
wherein it comprises a detection device configured to detect at least one movement in the scene, the detection device being able to transmit, to a control unit of the event camera, a wake-up signal which is liable to switch on said event camera when the detection device detects at least one movement in the scene.

9. The system as claimed in one of claims 2 to 8,
wherein the second illumination emitted by the second light source corresponds to a continuous illumination.

10. The system as claimed in one of claims 2 to 8,
wherein the second illumination emitted by the second light source corresponds to an illumination exhibiting an intensity which varies sinusoidally as a function of time.

11. The system as claimed in one of claims 2 to 8,
wherein the second illumination emitted by the second light source corresponds to an illumination exhibiting an intensity which varies intermittently as a function of time.

12. The system as claimed in one of claims 1 to 11,
wherein it comprises a processing device configured to determine, as a function of time, the position of the object and/or the speed at which the object moves on the basis of the events which are generated by the sensor of the event camera.

13. The system as claimed in claim 12,
wherein the processing device is configured to determine one or more movement vibration frequencies on the basis of the positions of the object.
